# EUROPEAN PATENT APPLICATION

(11) **EP 3 196 691 A1**
(43) Date of publication of application: **26.07.2017**
(21) Application number: 15840657.9
(22) Date of filing: 28.08.2015
(51) Int. Cl.: G02F 1/13363, G02B 5/30, G02F 1/1333

(54) **LIQUID CRYSTAL DISPLAY DEVICE**

(30) Priority: 10.09.2014 JP 2014184175
(71) Applicant: Panasonic Intellectual Property Management Co., Ltd., Osaka-shi, Osaka 540-6207 (JP)
(72) Inventor: OISHI, Toshiharu, Osaka 540-6207 (JP); FUJIMOTO, Takahide, Osaka 540-6207 (JP)
(74) Representative: Grünecker Patent- und Rechtsanwälte PartG mbB
(86) International application number: PCT/JP2015/004344
(87) International publication number: WO 2016/038832

(57) **Abstract**

The liquid crystal display device includes a transparent cover, a first polarizing plate with retardation function, an optical device, and a liquid crystal panel. The first polarizing plate with retardation function is in a form of a film, and is obtained by laminating, from the front side, a cover film, a polarizer layer, and a cover film with retardation function for changing the polarization state of transmitted light. The first polarizing plate with retardation function and the transparent cover are bonded by using a transparent adhesive layer. The second polarizing plate with retardation function has a configuration in which a cover film with retardation function for changing the polarization state of transmitted light, a polarizer layer, and a cover film are laminated, and is bonded to the liquid crystal section with a transparent adhesive layer being interposed between the second polarizing plate with retardation function and the liquid crystal section.

## Description

### TECHNICAL FIELD

The present invention relates to a liquid crystal display device.

### BACKGROUND ART

The improvement in antireflection performance of a liquid crystal display including an optical device such as a touch panel has long been demanded.

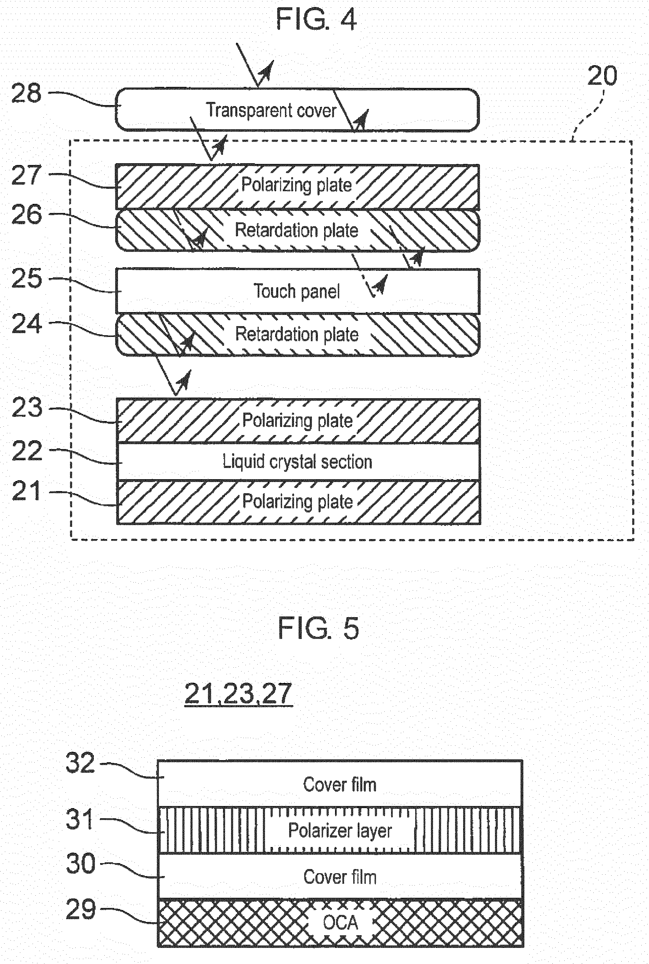

Conventionally, there is a technology disclosed in PTL 1 as an antireflection technology for a liquid crystal display having a touch panel. The liquid crystal display device disclosed in PTL 1 includes: a circularly polarizing plate formed by combining polarizing plate 27 and retardation plate 26; touch panel 25 having retardation plate 24 attached thereto; and a liquid crystal panel configured such that liquid crystal section 22 is sandwiched between polarizing plates 21 and 23, as in liquid crystal display device 20 illustrated in FIG. 4. As in a general liquid crystal panel, linearly polarized light is emitted from this liquid crystal panel. When light which is circularly polarized by circularly polarizing plate (26, 27) is reflected on touch panel 25, this light is circularly polarized in the opposite rotation direction due to reflection, and returned to circularly polarizing plate (26, 27). The light circularly polarized in the opposite rotation direction is converted into linearly polarized light by retardation plate 26 of the circularly polarizing plate, with the orientation of the linearly polarized light being changed by 90° from the orientation at the time of incidence, and absorbed by polarizing plate 27. Thus, the light reflected on touch panel 25 can be removed. In FIG. 4, reflection light to be removed is indicated by arrows of a one-dot-chain line.

### Citation List

### Patent Literature

PTL 1: U. S. Patent No. 6020945

### SUMMARY OF THE INVENTION

The present invention aims to significantly reduce reflection light in a liquid crystal display device that includes a transparent cover and an optical device such as a touch panel is provided in the liquid crystal display device.

The liquid crystal display device according to the present invention includes a transparent cover, a first polarizing plate with retardation function, an optical device, and a liquid crystal panel. The first polarizing plate with retardation function is in a form of a film, and is obtained by laminating, from a front side, a cover film, a polarizer layer, and a cover film with retardation function for changing a polarization state of transmitted light. The optical device is an optical device that transmits light through the optical device, and causes a smaller phase difference on transmitted light than the first polarizing plate with retardation function. The liquid crystal panel has a configuration in which a liquid crystal section is sandwiched between the second polarizing plate with retardation function on the front side and the polarizing plate on the back side. The transparent cover, the first polarizing plate with retardation function, the optical device, and the liquid crystal panel are disposed in sequence from the front side. The first polarizing plate with retardation function and the transparent cover are bonded by using a transparent adhesive layer. The second polarizing plate with retardation function is configured such that a cover film with retardation function for changing the polarization state of transmitted light, a polarizer layer, and a cover film are laminated from the front side, and is bonded to the liquid crystal section with a transparent adhesive layer interposed between the second polarizing plate with retardation function and the liquid crystal section.

The present invention can significantly reduce reflection light in a liquid crystal display device that includes a transparent cover and an optical device such as a touch panel is provided in the liquid crystal display device.

### BRIEF DESCRIPTION OF DRAWINGS

FIG. 1 is a diagram illustrating one example of a configuration of a liquid crystal display device according to an exemplary embodiment of the present invention.
FIG. 2 is a diagram illustrating one example of a configuration of a first or second polarizing plate with retardation function in FIG. 1.
FIG. 3 is a view illustrating one example in which the liquid crystal display device according to the exemplary embodiment of the present invention is mounted on a vehicle.
FIG. 4 is a diagram illustrating one example of a liquid crystal display device of a comparative example.
FIG. 5 is a diagram illustrating one example of a conventional polarizing plate.

### DESCRIPTION OF EMBODIMENT

Prior to the description of the exemplary embodiment of the present invention, problems of a conventional device will be briefly described. In recent years, a vehicle-mounted display needs to be provided with a transparent cover disposed on the surface of the display for enhancing design or preventing components from scattering when impact is applied.

The inventors of the present invention have studied on an amount of reflection light to be reduced, in the case in which the configuration in PTL 1 is applied to a vehicle-mounted display provided with a transparent cover. As a result of the study, it has been found that this configuration is unable to significantly reduce reflection light as illustrated in FIG. 4. According to the configuration in FIG. 4, light reflected on the interface between transparent cover 28 and an air layer, light reflected on the surface of polarizing plate 27, light reflected on the back surface of retardation plate 24 attached on touch panel 25, and light reflected on the surface of polarizing plate 23 of the liquid crystal panel exit to the outside without being removed. In FIG. 4, reflection light that is not removed is indicated by arrows of a solid line.

Among reflection light beams, the reflection light generated between touch panel 25 and polarizing plate 23 of the liquid crystal panel can be reduced by another countermeasure, such as a measure to directly bond the liquid crystal panel and touch panel 25. However, the direct bonding between the touch panel and the liquid crystal panel costs so much.

The exemplary embodiment of the present invention will be described below in detail with reference to the drawings. Note that the exemplary embodiment described below is merely illustrative, and the present invention is not limited to the exemplary embodiment described below.

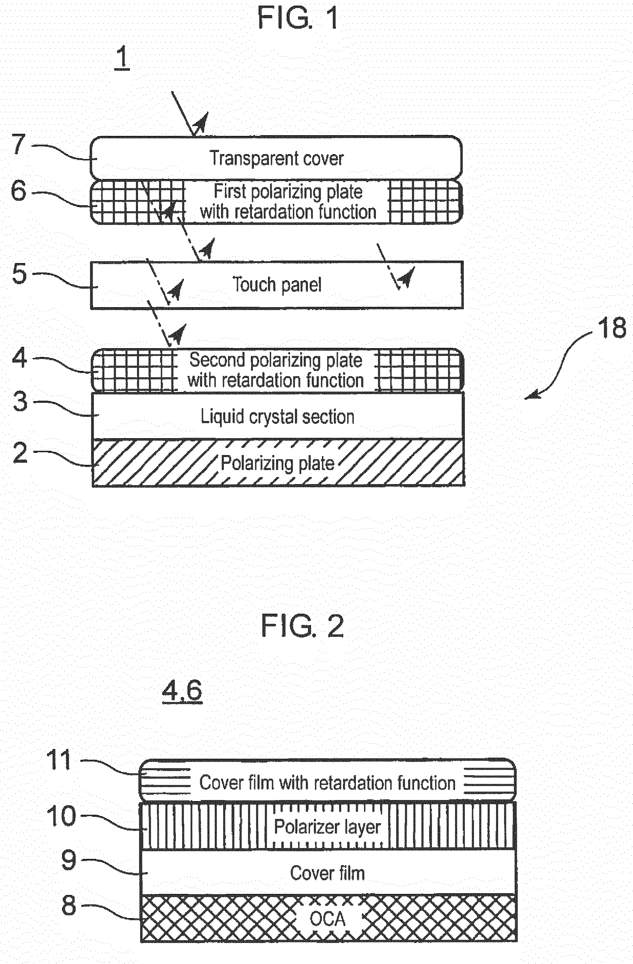

FIG. 1 is a diagram illustrating one example of a configuration of liquid crystal display device 1 according to the exemplary embodiment of the present invention.

Liquid crystal display device 1 according to the exemplary embodiment of the present invention includes transparent cover 7, first polarizing plate with retardation function 6, touch panel 5, second polarizing plate with retardation function 4, liquid crystal section 3, and polarizing plate 2, and these components are arranged in sequence from the front side. In the present specification, the side on which transparent cover 7 is disposed is defined as a front side, and the side on which liquid crystal panel 18 is disposed is defined as a back side.

Second polarizing plate with retardation function 4, liquid crystal section 3, and polarizing plate 2 form liquid crystal panel 18. Liquid crystal panel 18 is configured such that liquid crystal section 3 is sandwiched between polarizing plate 2 and second polarizing plate with retardation function 4. A backlight is disposed on the back of liquid crystal panel 18. The display control of liquid crystal panel 18 is performed from an external controller based on an electric signal.

Liquid crystal section 3 is configured such that liquid crystal materials are sandwiched between an alignment film and an electrode plate or the like, for example. Second polarizing plate with retardation function 4 is bonded on the surface of liquid crystal section 3 on the front side. Polarizing plate 2 is bonded on the surface of liquid crystal section 3 on the back side. Second polarizing plate with retardation function 4 includes OCA (Optically Clear Adhesive) layer 8 (FIG. 2) as a transparent adhesive layer, and is bonded to liquid crystal section 3 by using OCA layer 8. The detail of this configuration will be described later. While the emission light from the liquid crystal panel in PTL 1 is linearly polarized light, the emission light from liquid crystal panel 18 in the present exemplary embodiment is circularly polarized light due to the configuration in which second polarizing plate with retardation function 4 is bonded to the liquid crystal section 3 on the front side.

Transparent cover 7 is provided on the front surface of liquid crystal display device 1 to protect liquid crystal panel 18 and touch panel 5 and maintain the strength of liquid crystal display device 1. Transparent cover 7 is formed of polycarbonate, acryl, or glass having a shatterproof film attached thereon. First polarizing plate with retardation function 6 is bonded on the back surface of transparent cover 7. First polarizing plate with retardation function 6 includes OCA layer 8 as a transparent adhesive layer, and is bonded to transparent cover 7 by using OCA layer 8. This configuration will be described later in detail.

Touch panel 5 is disposed between liquid crystal panel 18 and transparent cover 7 on which first polarizing plate with retardation function 6 is attached. Touch panel 5 provides less retardation function for changing the polarization state of transmitted light to transmitted light, as compared to first polarizing plate with retardation function 6. Touch panel 5 and liquid crystal panel 18 are not bonded to each other, and an air layer is formed between them. Touch panel 5 and first polarizing plate with retardation function 6 are not bonded to each other, and an air layer is formed between them.

FIG. 2 is a diagram illustrating one example of the configuration of the first polarizing plate with retardation function or second polarizing plate with retardation function.

The first polarizing plate with retardation function 6 is in a form of a film having flexibility. First polarizing plate with retardation function 6 is configured such that OCA layer 8, cover film 9, polarizer layer 10, and cover film with retardation function 11 are laminated in this order. First polarizing plate with retardation function 6 has an integral structure, and each layer is in close contact with each other so as to be inseparable.

Cover film with retardation function 11 is a transparent cover film in a form of a film, and has a function of generating a phase difference of about a quarter wavelength on two mutually orthogonal electric field components of transmitted light.

Cover film with retardation function 11 also has a function of protecting polarizer layer 10 as a cover film. Cover film with retardation function 11 converts light which is linearly polarized in a predetermined orientation into circularly polarized light, and converts circularly polarized light into linearly polarized light.

Polarizer layer 10 transmits light which is linearly polarized in a predetermined orientation through polarizer layer 10, and absorbs light which is linearly polarized light orthogonal to the predetermined orientation.

Cover film 9 is transparent, and is in a form of a film for protecting polarizer layer 10.

OCA layer 8 is a transparent adhesive layer for bonding first polarizing plate with retardation function 6 to another element.

First polarizing plate with retardation function 6 is bonded to transparent cover 7 such that cover film 9 is directed to the front side and cover film with retardation function 11 is directed to the back side.

Second polarizing plate with retardation function 4 has the configuration similar to the configuration of first polarizing plate with retardation function 6.

Second polarizing plate with retardation function 4 may be formed by using the same element as first polarizing plate with retardation function 6 with the size and shape thereof being changed according to the element to which second polarizing plate with retardation function 4 is to be bonded. Second polarizing plate with retardation function 4 and first polarizing plate with retardation function 6 are in a form of a film, so that they can easily be changed in size and shape by being cut.

Second polarizing plate with retardation function 4 is bonded to liquid crystal section 3 such that cover film with retardation function 11 is directed to the front side and cover film 9 is directed to the back side. Second polarizing plate with retardation function 4 and the first polarizing plate with retardation function are disposed such that cover films 9 of the respective plates face each other.

Note that first polarizing plate with retardation function 6 or second polarizing plate with retardation function 4 may not have OCA layer 8. Specifically, first polarizing plate with retardation function 6 or second polarizing plate with retardation function 4 may have an integrated configuration in which cover film 9, polarizer layer 10, and cover film with retardation function 11 are laminated in this order. In this case, the bonding between first polarizing plate with retardation function 6 and another element or the bonding between second polarizing plate with retardation function 4 and another element may be made using OCR (Optically Clear Resin) as a transparent adhesive layer.

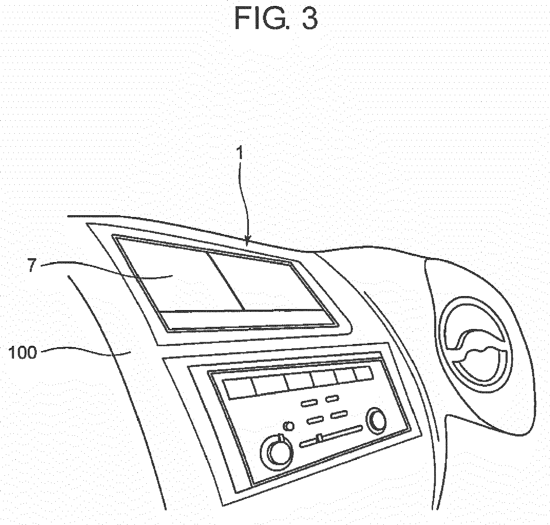

FIG. 3 is a view illustrating one example in which the liquid crystal display device is installed on a dashboard of a vehicle.

Liquid crystal display device 1 according to the present exemplary embodiment is installed on dashboard 100 around a front seat of the vehicle. The outer surface of liquid crystal display device 1 is designed to have a curved shape continuous with the surface of dashboard 100. Due to the restriction on the design, liquid crystal display device 1 needs transparent cover 7 that is easy to be formed into a variety of shapes and sizes.

### <Operation>

Next, the operation will be described with reference to FIGS. 1 and 2.

In liquid crystal display device 1 described above, light from the backlight passes through polarizing plate 2, liquid crystal section 3, and polarizer layer 10 of liquid crystal panel 18 to serve as display light. The display light is firstly converted into circularly polarized light by cover film with retardation function 11 of second polarizing plate with retardation function 4. The circularly polarized display light passes through touch panel 5, and then, is returned to linearly polarized light by cover film with retardation function 11 of first polarizing plate with retardation function 6. The orientation of first polarizing plate with retardation function 6 is defined such that the linearly polarized light has the orientation of passing through polarizer layer 10. Therefore, the linearly polarized display light passes through polarizer layer 10 and transparent cover 7, and exits to the outside.

Externally incident light is reflected on the interface between transparent cover 7 and the air layer, the interface between first polarizing plate with retardation function 6 and the air layer, the interior of touch panel 5 and interface between touch panel 5 and the air layer, and the front surface of liquid crystal panel 18. Among the reflected light beams, the light reflected on the front surface of transparent cover 7 becomes reflection light that can be visually recognized from the outside as being unchanged. In addition, on the interface between transparent cover 7 and first polarizing plate with retardation function 6, a small amount of light may be reflected and exit to the outside.

On the other hand, as indicated by the arrows of one-dot-chain line in FIG. 1, the other reflected light beams are converted into circularly polarized light beams by passing through first polarizing plate with retardation function 6 , and are converted into circularly polarized light beams in opposite rotation direction due to reflection, and converted into linearly polarized light beams with the orientation thereof being changed by 90° from the orientation at the time of incidence by cover film with retardation function 11. These light beams are absorbed by polarizer layer 10 in first polarizing plate with retardation function 6 so as not to exit to the outside.

### <Effects of exemplary embodiment>

As described above, liquid crystal display device 1 according to the exemplary embodiment can significantly reduce reflection light of light entering inside thereof, while being configured to include transparent cover 7 and the optical device (for example, touch panel 5), as is apparent from the comparison in reflection light beams between FIG. 1 and FIG. 4. In FIGS. 1 and 4, reflection light beams exiting to the outside are indicated by solid arrows, and reflection light beams to be removed are indicated by arrows of one-dot-chain line.

In addition, liquid crystal display device 1 according to the exemplary embodiment enables reduction in cost by reducing the variety of optical film elements. Specifically, since first polarizing plate with retardation function 6 and second polarizing plate with retardation function 4 can be the same type of element, only one type of optical film element is needed. In the configuration in FIG. 4, two types of optical film elements which are polarizing plate 27 and retardation plates 24 and 26 are needed.

In addition, liquid crystal display device 1 according to the exemplary embodiment can provide the effect of enabling reduction in display light loss by reducing the number of optical components through which display light is to pass. In the conventional display device, polarizing plates 21 and 23 in the liquid crystal panel and polarizing plate 27 combined with retardation plate 26 are configured as film elements. Such polarizing plates 21, 23, and 27 have the configuration in which OCA layer 29, cover film 30, polarizer layer 31, and cover film 32 are laminated as illustrated in FIG. 5. Accordingly, it is understood that the number of optical components through which display light is to pass in liquid crystal display device 1 according to the exemplary embodiment is lower than that in the configuration illustrated in FIG. 4.

The exemplary embodiment according to the present invention has been described above.

Note that the exemplary embodiment described above shows the example in which a touch panel is applied as an optical device interposed between the liquid crystal panel and the transparent cover. However, any optical device can be applied similarly to the touch panel, so long as it does not have a function of changing the polarization state of transmitted light. In addition, an optical device that changes the polarization state of transmitted light in an amount much smaller as compared to the first polarizing plate with retardation function or the second polarizing plate with retardation function may be applied, and in this case, the same effect can be provided.

In addition, while the present exemplary embodiment describes, as one example, a liquid crystal display device mounted on a vehicle, the liquid crystal display device according to the present invention is not limited to be mounted on a vehicle, and may be mounted on various locations.

### INDUSTRIAL APPLICABILITY

The present invention is usable for a liquid crystal display device provided with a transparent cover.

### REFERENCE MARKS IN THE DRAWINGS

- 1: liquid crystal display device
- 2,21,23,27: polarizing plate
- 3, 22: liquid crystal section
- 4: second polarizing plate with retardation function
- 5, 25: touch panel
- 6: first polarizing plate with retardation function
- 7, 28: transparent cover
- 8, 29: OCA layer
- 9, 30, 32: cover film
- 10, 31: polarizer layer
- 11: cover film with retardation function
- 18: liquid crystal panel
- 20: liquid crystal display device
- 24, 26: retardation plate
- 100: dashboard

## Claims

1. A liquid crystal display device comprising:
a transparent cover;
a first polarizing plate with retardation function in a form of a film;
an optical device that transmits light through the optical device;
a second polarizing plate with retardation function in a form of a film;
a liquid crystal section; and
a polarizing plate,
the transparent cover, the first polarizing plate with retardation function, the optical device, the second polarizing plate with retardation function, the liquid crystal section, and the polarizing plate being disposed in sequence,
wherein the first polarizing plate with retardation function is configured such that a cover film, a polarizer layer, and a cover film with retardation function for changing a polarization state of transmitted light are laminated in sequence from a side of the transparent cover,
the optical device is an optical device that causes a smaller phase difference on transmitted light than the first polarizing plate with retardation function,
the second polarizing plate with retardation function is configured such that a cover film with retardation function for changing a polarization state of transmitted light, a polarizer layer, and a cover film are laminated in sequence from the side of the transparent cover,
the first polarizing plate with retardation function and the transparent cover are bonded to each other by using a transparent adhesive layer, and
the second polarizing plate with retardation function is bonded to the liquid crystal section with a transparent adhesive layer interposed between the second polarizing plate with retardation function and the liquid crystal section.

2. The liquid crystal display device according to claim 1, wherein the first polarizing plate with retardation function and the second polarizing plate with retardation function are configured such that the cover film with retardation function, the polarizer layer, the cover film, and the transparent adhesive layer are laminated in sequence.

3. The liquid crystal display device according to claim 1, wherein the first polarizing plate with retardation function and the second polarizing plate with retardation function have an identical configuration, and are disposed such that the cover films of the respective plates face each other.

4. The liquid crystal display device according to claim 1, wherein the optical device is a touch panel.
